# EUROPÄISCHE PATENTANMELDUNG

(11) **EP 4 257 759 A1**
(43) Veröffentlichungstag der Anmeldung: **11.10.2023**
(21) Anmeldenummer: 23161502.2
(22) Anmeldetag: 13.03.2023
(51) Int. Cl.: E03C 1/288, E03C 1/298, F16K 15/14, E03C 1/184

(54) **EINSATZ**

(30) Priorität: 07.04.2022 AT 502232022
(71) Anmelder: Taferner, Marko, 9061 Wölfnitz (AT)
(72) Erfinder: Taferner, Marko, 9061 Wölfnitz (AT)
(74) Vertreter: Beer & Partner Patentanwälte KG

(57) **Zusammenfassung**

Ein Einsatz (1), der als Geruchsverschluss in den Abflussbereich einer Hausinstallation, beispielsweise in eine Abflussleitung, eingebaut werden kann, umfasst einen zylindrischen Bereich (2), der einen nach außen abstehenden Flansch (4) aufweist. Der Einsatz (1) umfasst weiters einen Schließbereich (3), der einen elastisch verformbaren Wandteil (5) umfasst. In der Schließstellung liegt der Wandteil (5) des Schließbereichs (3) an einer gegenüberliegenden Wand (6) des Einsatzes (1) an. Dabei liegt der freie Rand (8) des Wandteils (5) von innen her an der gegenüberliegenden Wand (6) an, sodass ein Geruchsverschluss gegeben ist. Wenn durch die Abflussleitung Wasser strömt, wird der Wandteil (5) des Schließbereichs (3) von dem abströmenden Wasser von der gegenüberliegenden Wand (6) wegbewegt, sodass der Schließbereich (3) geöffnet ist. Sobald kein Wasser mehr durch den Einsatz (1) strömt, legt sich der Wandteil (5) des Schließbereichs (3) wieder an die gegenüberliegende Wand (6) an, sodass der Geruchsverschluss gegeben ist.

## Beschreibung

Die Erfindung betrifft einen Einsatz, der als Geruchsverschluss im Abflussbereich von Hausinstallationen, insbesondere von deren Abflussleitungen, bestimmt ist.

Abflussbereiche von Hausinstallationen, beispielsweise Abflussleitungen von Waschbecken, Badewannen, Küchenspülen oder Ähnlichem, umfassen in der Regel einen Siphon, der beispielsweise als Bogensiphon ausgebildet ist. In dem Siphon sammelt sich Wasser, das einen Geruchsverschluss bildet, sodass in nachgeordneten Bereichen der Abflussleitung und in einem Kanal, in den die Abflussleitung mündet, entstehende Gerüche nicht durch die Öffnung der Abflussleitung im Waschbecken, in der Badewanne, in der Küchenspüle und Ähnlichem austreten können.

Wenn Abflussleitungen längere Zeit nicht benützt werden, verdunstet das in dem Siphon enthaltene Wasser und der Geruchsverschluss ist unwirksam.

Aus US 4 870 992 A ist ein Rückschlagventil bekannt, das in eine Abflussleitung eingebaut werden kann. Das Ventil besitzt einen nachgiebig verformbaren Verschlussteil, der den Durchtritt von Flüssigkeit erlaubt, aber den Durchtritt von Gasen in der Gegenrichtung verhindert. Der verformbare Verschlussteil schließt unmittelbar an einen Flansch des Rückschlagventils an, welcher den Einbau des Ventils in eine Abflussleitung erlaubt. Der Flansch wird zwischen Teilen der Abflussleitung geklemmt, was zu nachteiligen Verformungen des Ventils führt.

Ähnliche Rückschlagventile sind in WO 2020/130807 A1 und US D924378 S gezeigt und beschrieben.

Der Erfindung liegt die Aufgabe zugrunde, einen Einsatz zur Verfügung zu stellen, der das Austreten von Gerüchen aus der Abflussleitung, insbesondere einer Hausinstallation, auch verhindert, wenn in dem Siphon kein Wasser mehr enthalten ist.

Gelöst wird diese Aufgabe erfindungsgemäß mit einem Einsatz, der die Merkmale von Anspruch 1 aufweist.

Bevorzugte und vorteilhafte Ausgestaltungen des erfindungsgemäßen Einsatzes sind Gegenstand der Unteransprüche.

Da der erfindungsgemäße Einsatz einen im Wesentlichen zylindrischen Bereich umfasst, kann er einfach in eine Abflussleitung, insbesondere in dem Ende der Abflussleitung, welches an ein Waschbecken, eine Badewanne, eine Küchenspüle oder Ähnliches angeschlossen ist, eingebaut werden.

Dank des in dem Einsatz vorgesehenen Schließbereichs ist die Abflussleitung geschlossen, solange durch die Abflussleitung kein Wasser strömt. Erst wenn durch die Abflussleitung Wasser strömt, wird der Schließbereich durch den Druck des abströmenden Wassers geöffnet, sodass das Abströmen von Wasser durch die Abflussleitung nicht behindert ist.

Bevorzugt ist im Rahmen der Erfindung, wenn vorgesehen ist, dass der im Wesentlichen zylindrische Bereich an seinem dem Schließbereich gegenüberliegenden Ende einen nach außen abstehenden Flansch aufweist.

Diese Ausführungsform erlaubt es, den erfindungsgemäßen Einsatz an Stelle der üblicherweise angeordneten Dichtung, die zwischen dem Abflussstutzen und der eigentlichen Abflussleitung vorgesehen ist, einzubauen. Der erfindungsgemäße Einsatz wird dann durch die an sich übliche Überwurfmutter, welche die Abflussleitung mit dem Abflussstutzen verbindet, festgehalten. Der zylindrische Bereich, der in einer bevorzugten Ausführungsform des erfindungsgemäßen Einsatzes zwischen dem nach außen weisenden Flansch und dem Schließbereich des Einsatzes vorgesehen ist, hat den vorteilhaften Effekt, dass nachteilige, weil die Funktion des Schließbereiches beeinträchtigende, Verformungen des erfindungsgemäßen Einsatzes, insbesondere seines Schließbereiches, verhindert sind. Dies, weil Verformungen, die auftreten können, wenn der Einsatz über seinen Flansch klemmend in eine Abflussleitung eingebaut wird, ausschließlich in dem zylindrischen Bereich auftreten. Dies auch, wenn der Flansch stark geklemmt und dabei verformt wird.

In einer bevorzugten Ausführungsform der Erfindung kann vorgesehen sein, dass der Schließbereich einen Wandteil umfasst, der bei geschlossenem Schließbereich von innen her an einer gegenüberliegenden Wand des Einsatzes anliegt.

Dabei ist in einer Weiterbildung bevorzugt, dass der Wandteil des Schließbereichs in der geschlossenen Stellung im Wesentlichen die Form eines Teils eines Kegelmantels aufweist. Dabei kann der Kegelmantel bevorzugt so ausgerichtet sein, dass dessen Erzeugende, die der Wand des Einsatzes, an welcher der Wandteil des Schließbereichs in der Schließstellung anliegt, benachbart ist, mit der Wand einen spitzen Winkel einschließt.

Im Rahmen der Erfindung ist eine Ausführungsform in Betracht gezogen, bei welcher der gesamte Einsatz aus gummielastischem Werkstoff besteht, wenngleich es im Prinzip hinreicht, wenn ausschließlich der Wandteil des Einsatzes, welcher den Schließbereich bildet, aus elastischem, insbesondere gummielastischem, Werkstoff besteht.

Insbesondere wenn erfindungsgemäß vorgesehen ist, dass der Wandteil des Schließbereichs mit seinem freien Rand an der gegenüberliegenden Wand, insbesondere an dem freien Rand der Wand, geruchsdicht anliegt, ergibt sich eine räumlich günstige Anordnung, die es erlaubt, den Einsatz auch in solchen Abflussleitungen einzubauen, in welchen ein Ansatz für den Anschluss einer Ableitung eines Geschirrspülers oder Ähnlichem mündet. Bei dieser Ausführungsform strömt das vom Geschirrspüler oder Ähnlichem stammende Abwasser am Wandteil des Schließbereichs außen vorbei.

Weitere Einzelheiten und Merkmale der Erfindung ergeben sich aus der nachstehenden Beschreibung eines Ausführungsbeispiels des erfindungsgemäßen Einsatzes unter Bezugnahme auf die beispielhaften Zeichnungen. Es zeigt:
- Fig. 1: einen Einsatz in Seitenansicht,
- Fig. 2: den Einsatz aus Fig. 1 von oben der Fig. 1 aus gesehen,
- Fig. 3: den Einsatz aus Fig. 1 von unten der Fig. 1 aus gesehen,
- Fig. 4: einen Schnitt längs der Linie IV-IV von Fig. 2,
- Fig. 5: den Einsatz aus Fig. 1 in Schrägansicht,
- Fig. 6: ein erstes Einbaubeispiel eines Einsatzes und
- Fig. 7: ein zweites Einbaubeispiel eines Einsatzes.

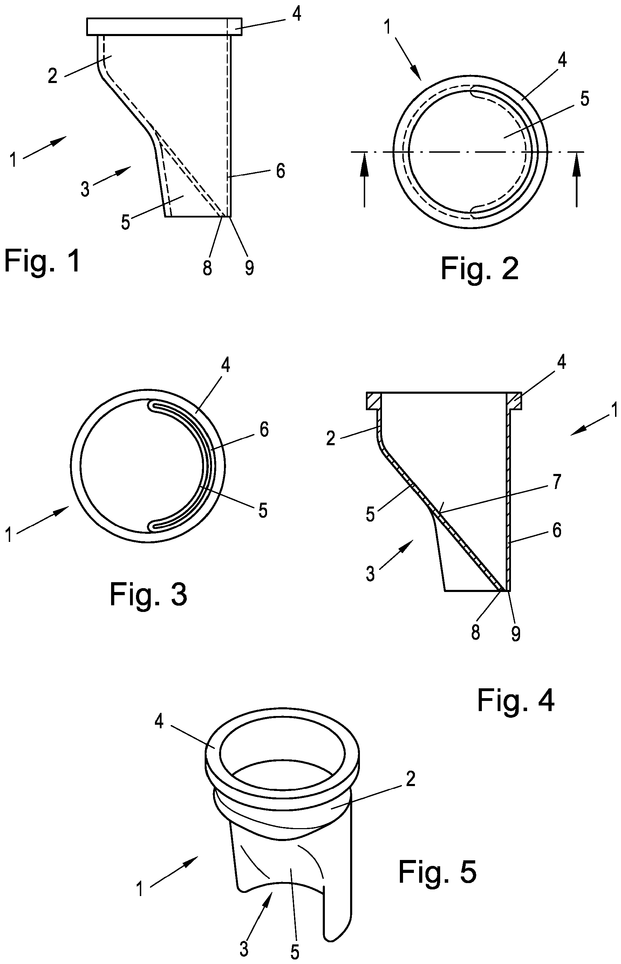

Ein Einsatz 1 umfasst einen, im Ausführungsbeispiel kreiszylindrischen, Bereich 2 und einen Schließbereich 3. An dem in Fig. 1 oben liegenden Ende des Einsatzes 1 ist ein nach außen abstehender, ringförmiger Flansch 4 vorgesehen.

Der Schließbereich 3 des Einsatzes 1 umfasst einen Wandteil 5, der bei der in Fig. 1 bis 5 gezeigten Schließstellung an der ihm gegenüberliegenden Wand 6 anliegt.

Der Wandteil 5 des Schließbereichs 3 hat im Wesentlichen die Form eines Teils eines Kegelmantels, wobei die der Wand 6 am nächsten liegende Erzeugende 7 des Kegelmantels mit der Wand 6 einen spitzen Winkel einschließt.

Insbesondere aus den Fig. 3 und 4 ist ersichtlich, dass der freie Rand 8 des Wandteils 5 des Schließbereichs 3 an dem freien Rand 9 der Wand 6 anliegt. Dies bedeutet, dass in der Schließstellung, die in den Fig. 1 und 4 gezeigt ist, ein Geruchsverschluss gegeben ist.

Hinzuweisen ist noch darauf, dass sowohl der Wandteil 5 des Schließbereichs 3 als auch die dem Wandteil 5 gegenüberliegende Wand 6 des Einsatzes 1 Verlängerungen des kreiszylindrischen Bereichs 2 des Einsatzes 1 sind.

Im Rahmen der Erfindung ist es bevorzugt, wenn der gesamte Einsatz 1 aus gummielastischem Werkstoff besteht. Insbesondere sind gummielastische Kunststoffe, wie Ethylen-Propylen-DienKautschuk (EPDM), in Betracht gezogen.

Diese Ausführungsform des Einsatzes 1 ergibt die gewünschte Wirkung, da der Wandteil 5 des Schließbereichs 3 unter der Wirkung von durch den Einsatz 1 in eine Abflussleitung strömendem Wasser geöffnet wird, indem der Wandteil 5 des Schließbereichs 3 von der gegenüberliegenden Wand 6 abgehoben wird.

In der Schließstellung, also bei geschlossenem Schließbereich 3, ist der freie Rand 8 des Wandteils 5 des Schließbereichs 3 genauso kreisbogenförmig gekrümmt, wie der freie Rand 9 der gegenüberliegenden Wand 6 des Einsatzes 1. Dies zeigt insbesondere die Ansicht des Einsatzes 1 gemäß Fig. 3.

Der erfindungsgemäße Einsatz 1 kann - ausgehend von einem im Wesentlichen kreiszylindrischen Formteil - so verstanden werden, dass der Teil der Wand des Formteils so weit nach innen verformt ist, dass der freie Rand 8 des Wandteils 5 an dem gegenüberliegenden freien Rand 9 der nicht verformten Wand 6 anliegt (siehe Fig. 3).

Da wenigstens der Wandteil 5 des Schließbereichs 3 aus elastischem Werkstoff besteht, wird er von Wasser, das durch den Einsatz 1 fließt, so verformt, dass der Schließbereich 3 geöffnet ist. Bei geöffnetem Schließbereich 3 liegt der Wandteil 5 an der gegenüberliegenden Wand 6 nicht an, so dass in dem Einsatz 1 eine durchgehende Öffnung vorliegt. Sobald kein Wasser mehr durch den Einsatz 1 fließt, bewegt sich der Wandteil 5 wieder zurück und der Schließbereich 3 befindet sich wieder in der Schließstellung und bildet den Geruchsverschluss. Dies, weil sich der freie Rand 8 des Wandteils 5 unter elastischem Zurückfedern des Wandteils 5 wieder an die gegenüberliegende Wand 6, insbesondere an den freien Rand 9 der Wand 6, anlegt.

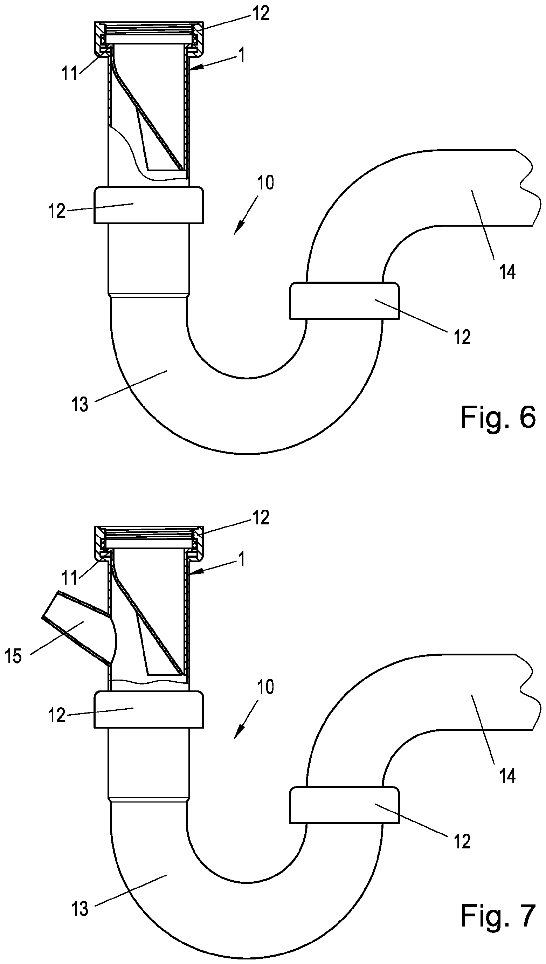

In Fig. 6 ist ein Einbaubeispiel eines Einsatzes 1 in eine Abflussleitung 10, die von einer Abflussgarnitur gebildet wird, dargestellt. Es ist erkennbar, dass der Einsatz 1 mit seinem Flansch 4 an einem endständigen Ringflansch 11 aufliegt und anstelle der sonst dort vorgesehenen Dichtung einer Überwurfmutter 12 gegen einen Abflussstutzen (nicht gezeigt) dichtend gehalten ist.

Der Bereich der Abflussleitung 10, in welchem der Einsatz 1 angeordnet ist, geht in einen Bogensiphon 13 über, der mit Hilfe von Überwurfmuttern 12 befestigt ist, wobei an dem Bogensiphon 13 ein Ablaufrohr 14 anschließt.

Wie in Fig. 7 gezeigt, ergibt sich durch die besondere Form des erfindungsgemäßen Einsatzes 1 und durch die beschriebene Ausgestaltung des Schließbereichs 3 die Möglichkeit, den Einsatz 1 in einer Abflussgarnitur für eine Spüle mit Einlaufstutzen 15 für einen Geschirrspüler oder Ähnliches zu verwenden, da durch die besondere Form des Schließbereichs 3 keine Behinderung des Strömens von Wasser aus dem Einlaufstutzen 15 gegeben ist.

Die Fig. 6 und 7 zeigen, dass der Flansch 4 des Einsatzes 1, wenn der Einsatz 1 in eine Abflussleitung 10 eingebaut ist, zwischen dem endständigen Ringflansch 11 und der Überwurfmutter 12 sitzt. Verformungen des Einsatzes 1, die bei großem Druck, den der Ringflansch 11 und die Überwurfmutter 12 auf den Flansch 4 ausüben, auftreten können, wenn die Überwurfmutter 12 angezogen wird, bleiben auf den zylindrischen Bereich 2 des Einsatzes 1 beschränkt. So wird die Funktion des Schließbereiches 3 des Einsatzes 1 auch dann nicht nachteilig beeinflusst, wenn der Flansch 4 des in eine Abflussleitung 10 eingebauten Einsatzes 1 durch Klemmkräfte verformt ist.

Zusammenfassend kann ein Ausführungsbeispiel der Erfindung wie folgt beschrieben werden:

Ein Einsatz 1, der als Geruchsverschluss in den Abflussbereich einer Hausinstallation, beispielsweise in eine Abflussleitung, eingebaut werden kann, umfasst einen zylindrischen Bereich 2, der einen nach außen abstehenden Flansch 4 aufweist. Der Einsatz 1 umfasst weiters einen Schließbereich 3, der einen elastisch verformbaren Wandteil 5 umfasst. In der Schließstellung liegt der Wandteil 5 des Schließbereichs 3 an einer gegenüberliegenden Wand 6 des Einsatzes 1 an. Dabei liegt der freie Rand 8 des Wandteils 5 von innen her an der gegenüberliegenden Wand 6 an, sodass ein Geruchsverschluss gegeben ist. Wenn durch die Abflussleitung Wasser strömt, wird der Wandteil 5 des Schließbereichs 3 von dem abströmenden Wasser von der gegenüberliegenden Wand 6 wegbewegt, sodass der Schließbereich 3 geöffnet ist. Sobald kein Wasser mehr durch den Einsatz 1 strömt, legt sich der Wandteil 5 des Schließbereichs 3 wieder an die gegenüberliegende Wand 6 an, sodass der Geruchsverschluss gegeben ist.

## Patentansprüche

1. Einsatz (1) als Geruchsverschluss im Abflussbereich von Hausinstallationen, insbesondere in Abflussleitungen (10), **dadurch gekennzeichnet, dass** der Einsatz (1) einen im Wesentlichen zylindrischen Bereich (2) und einen Schließbereich (3) umfasst, wobei der Schließbereich (3) geschlossen ist und von Wasser, das durch den Einsatz (1) strömt, öffenbar ist.

2. Einsatz nach Anspruch 1, **dadurch gekennzeichnet, dass** der im Wesentlichen zylindrische Bereich (2) an seinem dem Schließbereich (3) gegenüberliegenden Ende einen nach außen abstehenden Flansch (4) aufweist.

3. Einsatz nach Anspruch 1 oder 2, **dadurch gekennzeichnet, dass** der Schließbereich (3) einen Wandteil (5) umfasst, der bei geschlossenem Schließbereich (3) von innen her an einer gegenüberliegenden Wand (6) des Einsatzes (1) anliegt.

4. Einsatz nach Anspruch 3, **dadurch gekennzeichnet, dass** die Wand (6), an welcher der Wandteil (5) anliegt, eine Verlängerung des zylindrischen Bereichs (2) ist.

5. Einsatz nach Anspruch 4, **dadurch gekennzeichnet, dass** die Wand (6) die Form eines Teils des Mantels eines Kreiszylinders hat.

6. Einsatz nach einem der Ansprüche 3 bis 5, **dadurch gekennzeichnet, dass** der Wandteil (5) des Schließbereichs (3) eine Verlängerung des zylindrischen Bereichs (2) ist.

7. Einsatz nach einem der Ansprüche 3 bis 6, **dadurch gekennzeichnet, dass** wenigstens der Wandteil (5) des Schließbereichs (3) des Einsatzes (1) aus elastischem Werkstoff, wie einem gummielastischen Werkstoff, insbesondere einem Kunststoff, wie Ethylen-Propylen-DienKautschuk (EPDM), besteht.

8. Einsatz nach einem der Ansprüche 3 bis 7, **dadurch gekennzeichnet, dass** der Wandteil (5) des Schließbereichs (3) mit seinem freien Rand (8) an der gegenüberliegenden Wand (6), insbesondere an dem freien Rand (9) der Wand (6), geruchsdicht anliegt.

9. Einsatz nach Anspruch 8, **dadurch gekennzeichnet, dass** der freie Rand (8) des Wandteils (5) des Schließbereichs (3) bogenförmig, insbesondere kreisbogenförmig, gekrümmt ist.

10. Einsatz nach einem der Ansprüche 3 bis 9, **dadurch gekennzeichnet, dass** der Wandteil (5) des Schließbereichs (3) in der Schließstellung des Schließbereichs (3) im Wesentlichen die Form eines Teils eines Kegelmantels aufweist.

11. Einsatz nach Anspruch 10, **dadurch gekennzeichnet, dass** die der Wand (6) am nächsten liegende Erzeugende (7) des Kegelmantels mit der Wand (6) einen spitzen Winkel einschließt.
